# EUROPÄISCHE PATENTSCHRIFT

(11) **EP 4 595 153 B1**
(45) Veröffentlichungstag und Bekanntmachung des Hinweises auf die Patenterteilung: **07.10.2026**
(21) Anmeldenummer: 24817545.7
(22) Anmeldetag: 29.11.2024
(51) Int. Cl.: H01M 10/613, H01M 10/627, H01M 10/6554, H01M 10/6556, H01M 50/204, H01M 50/207, B29C 43/00, B29C 45/00

(54) **BATTERIEGEHÄUSE MIT KÜHLVORRICHTUNG, BATTERIE MIT EINEM BATTERIEGEHÄUSE UND VERFAHREN ZUR HERSTELLUNG EINES BATTERIEGEHÄUSES**
BATTERY HOUSING WITH COOLING DEVICE, BATTERY WITH A BATTERY HOUSING AND METHOD FOR PRODUCING A BATTERY HOUSING
BOÎTIER DE BATTERIE DOTÉ D'UN DISPOSITIF DE REFROIDISSEMENT, BATTERIE DOTÉE D'UN BOÎTIER DE BATTERIE ET PROCÉDÉ DE FABRICATION D'UN BOÎTIER DE BATTERIE

(30) Priorität: 30.11.2023 DE 102023133602
(43) Veröffentlichungstag der Anmeldung: 06.08.2025
(73) Patentinhaber: Kautex Textron GmbH & Co. KG, 53229 Bonn (DE)
(72) Erfinder: KOPIEC, Christian, 53488 Troisdorf (DE); KROUSS, René, 53229 Bonn (DE); ELBAEK, Erik, 61350 Bad Homburg (DE)
(74) Vertreter: Richly & Ritschel Patentanwälte PartG mbB
(86) Internationale Anmeldenummer: PCT/EP2024/084079
(87) Internationale Veröffentlichungsnummer: WO 2025/114532

(56) Entgegenhaltungen:
- CN-A- 113 611 951
- CN-A- 116 315 262
- DE-A1- 102021 118 631
- US-A1- 2020 161 728
- US-A1- 2022 344 742

## Beschreibung

Die vorliegende Erfindung betrifft ein Batteriegehäuse mit einer Kühlvorrichtung, eine Batterie mit einem Batteriegehäuse und ein Verfahren zum Herstellen eines Batteriegehäuses.

In Batterien, beispielsweise in Traktionsbatterien oder Speicherbatterien (Stromspeichern) für beispielsweise Solaranlagen und/oder Windkraftanlagen, verursachen große Lade- und Entladeströme große thermische Verluste, die zu einer Erwärmung von Batteriezellen und/oder Batteriemodulen der Batterie führen. Um die Batterien vor thermischer Beschädigung zu schützen und einen hohen Wirkungsgrad zu erzielen, ist es wichtig, diese in einem gewünschten Temperaturbereich zu halten. Daher muss Wärme aus der Batterie abgeführt werden. Um eine ausreichende Wärmeabfuhr sicherzustellen, werden Batteriezellen von Batterien im Betrieb, d.h. beim Laden und/oder Entladen, gekühlt. Dabei werden aktuell verschiedene Arten der Kühlung - beispielsweise die Flüssigkeitskühlung - verwendet.

Ferner kann es aus denselben oben genannten Gründen vorteilhaft sein, die Batteriezellen bei niedrigen Außentemperaturen zu beheizen.

Bei Systemen zur Flüssigkeitskühlung kann prinzipiell eine aktive oder eine passive Zirkulation des Wärmetransportmediums erfolgen, um die abgegebene Wärme durch Konvektion abzuführen. Bei der passiven Zirkulation erfolgt eine Bewegung des Wärmetransportmediums ausschließlich durch einen Temperaturgradienten innerhalb des Wärmetransportmediums, während bei einer aktiven Zirkulation das Wärmetransportmedium aktiv zirkuliert wird, um die Wärme von den Batteriezellen abzuführen.

Bei aus dem Stand der Technik bekannten Systemen zur Flüssigkeitskühlung sind Dichtstellen häufig in dem Aufnahmevolumen von Batteriegehäusen angeordnet. Dadurch kann es zu einem Kurzschluss von in dem Aufnahmevolumen angeordneten Batteriezellen kommen, wenn Kühlflüssigkeit aus den Dichtstellen ausläuft und mit den Batteriezellen in Kontakt gelangt.

Ein Ansatz zur Vermeidung eines Kontaktes zwischen Batteriezellen und Kühlflüssigkeit ist es, keine Dichtstellen in dem Aufnahmevolumen von Batteriegehäusen vorzusehen. Derart ausgebildete Batteriegehäuse werden in mehreren Fertigungsschritten, bei denen beispielsweise eine Kühlvorrichtung aus Metall mit einem thermoplastischen Material umspritzt wird, hergestellt. Zur Steigerung der mechanischen Stabilität der Batteriegehäuse und zur Vermeidung von Dichtstellen in dem Aufnahmevolumen von Batteriegehäusen werden die Kühlvorrichtungen teilweise um- und überspritzt. Die bei dem Um- und Überspritzen der Kühlvorrichtung auftretenden Prozessbelastungen durch Temperatur und Druck führen jedoch häufig dazu, dass vorgesehene Kavitäten der Kühlvorrichtung, beispielsweise Fluidkanäle, unter den Prozessbelastungen kollabieren und irreversibel mechanisch deformiert werden. Dies führt zu hohen Fertigungskosten aufgrund von Fehlteilproduktion bis hin zur nicht wirtschaftlichen Herstellbarkeit von derartigen Batteriegehäusen.

Die US 2022/344742 A1 offenbart die Herstellung eines Batteriegehäuses bei dem eine Kühlvorrichtung in einer Form umformt wird.

Der vorliegenden Erfindung liegt die Aufgabe zugrunde, ein Batteriegehäuse mit einer Kühlvorrichtung mit einem verbesserten Schutz vor Auslaufen von Kühlfluid und gleichzeitig verbesserten mechanischen Eigenschaften, insbesondere einer verbesserten Widerstandsfähigkeit gegen Temperatur- und Druckbelastungen während der Herstellung, bereitzustellen.

Die der vorliegenden Erfindung zugrundeliegende Aufgabe wird durch ein Batteriegehäuse mit den Merkmalen des Anspruchs 1 gelöst. Vorteilhafte Ausgestaltungen des Batteriegehäuses sind in den von Anspruch 1 abhängigen Ansprüchen beschrieben.

Im Genaueren wird die der vorliegenden Erfindung zugrundeliegende Aufgabe durch ein Batteriegehäuse aufweisend eine ein Aufnahmevolumen zumindest teilweise umschließende äußere Wandung und eine Kühlvorrichtung gelöst. Die Kühlvorrichtung weist eine eine erste Verbindungsfläche aufweisende Basisplatte und eine eine zweite Verbindungsfläche aufweisende Deckplatte auf, wobei die Verbindungsflächen der Basisplatte und der Deckplatte zumindest in einem um die Kühlvorrichtung umlaufend ausgebildeten Randbereich derart miteinander stoffschlüssig verbunden sind, dass ein Fluidkanal zum Durchleiten eines Kühlfluids zwischen der Basisplatte und der Deckplatte gebildet ist. Die Kühlvorrichtung ist derart mit dem Batteriegehäuse verbunden, dass der gesamte Randbereich der Kühlvorrichtung innerhalb der äußeren Wandung des Batteriegehäuses angeordnet ist, und die Kühlvorrichtung zumindest einen Teil des Gehäusebodens des Batteriegehäuses, vorzugsweise den gesamten Gehäuseboden des Batteriegehäuses bildet. Das Batteriegehäuse weist zumindest eine mit der äußeren Wandung verbundene innere Wandung auf, wobei die innere Wandung sich zwischen zwei vorzugsweise gegenüberliegenden Wandungsabschnitten der äußeren Wandung erstreckt, und die innere Wandung des Batteriegehäuses zumindest abschnittweise mit einer dem Aufnahmevolumen zugewandten Kühlfläche der Kühlvorrichtung in Kontakt ist. Vorzugsweise ist die innere Wandung des Batteriegehäuses zumindest abschnittsweise mit der dem Aufnahmevolumen zugewandten Kühlfläche der Kühlvorrichtung verbunden.

Das erfindungsgemäße Batteriegehäuse weist den Vorteil auf, dass eine effiziente Kühlung von im Batteriegehäuse montierten Batteriekomponenten (z.B. Batteriezellen und/oder Batteriemodule) ermöglicht ist. Ferner weist das erfindungsgemäße Batteriegehäuse den Vorteil auf, dass dieses einen verbesserten Schutz vor Auslaufen von Kühlfluid aus der Kühlvorrichtung aufweist. Dadurch, dass der gesamte Randbereich der Kühlvorrichtung innerhalb der äußeren Wandung des Batteriegehäuses angeordnet ist, kann Kühlfluid nicht in das Aufnahmevolumen gelangen. Somit sind Batteriekomponenten, die in dem Aufnahmevolumen des erfindungsgemäßen Batteriegehäuses angeordnet werden können, vor dem Kühlfluid geschützt, so dass ein verbesserter Schutz vor einem Kurzschluss der Batteriekomponenten besteht. Schließlich weist das erfindungsgemäße Batteriegehäuse eine verbesserte mechanische Festigkeit aufgrund der inneren Wandung auf.

Die innere Wandung kann auch als Versteifungswandung oder als Stützwandung bezeichnet werden.

Die innere Wandung ist in dem Aufnahmevolumen des Batteriegehäuses angeordnet.

Die innere Wandung kann mit der äußeren Wandung stoffschlüssig verbunden sein. Vorzugsweise ist die innere Wandung mit der äußeren Wandung monolithisch ausgebildet.

Die innere Wandung kann eine gleiche Höhenerstreckung wie die äußere Wandung aufweisen. Vorzugsweise weist die innere Wandung eine kleinere Höhenerstreckung als die äußere Wandung auf. In diesem Fall kann die innere Wandung auch als Rippe bzw. als flache Rippe bezeichnet werden.

Ein derart ausgebildetes Batteriegehäuse weist den Vorteil auf, dass das Batteriegehäuse, insbesondere die äußere Wandung und die innere Wandung, in einem Fertigungsschritt herstellbar ist/sind.

Die innere Wandung kann mit der äußeren Wandung einen Winkel von kleiner oder gleich 90 ° einschließen. Die innere Wandung kann mit der äußeren Wandung einen Winkel von kleiner oder gleich 45 ° einschließen.

Ein Wandungsabschnitt der äußeren Wandung kann ein geradlinig verlaufender Abschnitt der äußeren Wandung sein. Alternativ oder zusätzlich kann ein Wandungsabschnitt der äußeren Wandung auch ein Eckbereich der äußeren Wandung sein.

Vorzugsweise erstreckt sich die innere Wandung orthogonal von einem ersten Wandungsabschnitt der äußeren Wandung zu einem dem ersten Wandungsabschnitt der äußeren Wandung gegenüberliegenden zweiten Wandungsabschnitt der äußeren Wandung.

Die erste Verbindungsfläche der Basisplatte und/oder die zweite Verbindungsfläche der Deckplatte kann/können aus einem Metall gebildet sein.

Die Kühlfläche der Deckplatte kann aus einem Metall gebildet sein.

Ein derart ausgebildetes Batteriegehäuse weist den Vorteil auf, dass eine verbessert effiziente Kühlung von im Batteriegehäuse montierten Batteriekomponenten ermöglicht ist.

Die Basisplatte kann eine der ersten Verbindungsfläche der Basisplatte gegenüberliegend angeordnete Unterseite aufweisen. Die Unterseite kann aus einem Metall gebildet sein.

Die Verbindungsflächen der Basisplatte und der Deckplatte sind einander gegenüberliegend angeordnet sein.

Die Verbindungsflächen der Basisplatte und der Deckplatte können miteinander verschweißt sein.

Ein derart ausgebildetes Batteriegehäuse weist den Vorteil auf, dass dieses einen nochmals verbesserten Schutz vor Auslaufen von Kühlfluid aufweist.

Vorzugsweise sind die Verbindungsflächen der Basisplatte und der Deckplatte mittels Kontaktschweißen miteinander verschweißt. Ein derart ausgebildetes Batteriegehäuse weist den Vorteil auf, dass dieses vereinfacht herstellbar ist.

Das Kontaktschweißen ist dem Fachmann bekannt. Das Kontaktschweißen ist ein Festkörperschweißverfahren, bei dem das Fügen ohne Schmelzen der beiden zu schweißenden Bauteile an der Schnittstelle der beiden zu schweißenden Bauteile erfolgt.

Alternativ oder zusätzlich sind die Verbindungsflächen der Basisplatte und der Deckplatte mittels Laserschweißen miteinander verschweißt.

Ein derart ausgebildetes Batteriegehäuse weist den Vorteil auf, dass dieses einen nochmals verbesserten Schutz vor Auslaufen von Kühlfluid aufweist.

Der Fluidkanal kann mit einem Zulaufanschluss und einem Ablaufanschluss fluidverbunden sein.

Die der Verbindungsfläche der Basisplatte gegenüberliegend angeordnete Unterseite der Basisplatte kann unter Ausbildung des Fluidkanals ausgewölbt ausgebildet sein.

Ein derart ausgebildetes Batteriegehäuse weist den Vorteil auf, dass eine erhöhte Kühlleistung der Kühlvorrichtung ermöglicht ist.

Das Merkmal, gemäß dem die Unterseite der Basisplatte nach unten ausgewölbt ist, kann auch so ausgedrückt werden, dass die Unterseite der Basisplatte zumindest eine Erhebung aufweist. Mit anderen Worten ist die Unterseite der Basisplatte bevorzugt nicht flach ausgebildet.

Der Fluidkanal kann meanderförmig oder spiralförmig zwischen der Basisplatte und der Deckplatte gebildet sein.

Ein derart ausgebildetes Batteriegehäuse weist den Vorteil auf, aufgrund der längeren Kühlstrecke des Fluidkanals eine verbessert effiziente Kühlung von im Batteriegehäuse angeordneten Batteriekomponenten ermöglicht ist.

Der um die Kühlvorrichtung umlaufend ausgebildete Randbereich ist Bestandteil der Kühlvorrichtung. Mit anderen Worten ist der um die Kühlvorrichtung umlaufend ausgebildete Randbereich fugenlos mit der Kühlvorrichtung verbunden.

Der um die Kühlvorrichtung umlaufend ausgebildete Randbereich kann zumindest abschnittweise gegenüber der Kühlfläche der Deckplatte abgewinkelt sein.

Ein derart ausgebildetes Batteriegehäuse weist den Vorteil auf, dass dieses einen nochmals verbesserten Schutz vor Auslaufen von Kühlfluid aufweist. Aufgrund des gegenüber der Kühlfläche abgewinkelten Randbereichs weist das Batteriegehäuse zusätzlich zur stoffschlüssigen Verbindung zwischen der ersten Verbindungsfläche der Basisplatte und der zweiten Verbindungsfläche der Deckplatte einen zusätzlichen Schutz durch die Formgebung des Randbereichs vor Auslaufen von Kühlfluid auf. Ferner kann durch die abgewinkelte Ausbildung des Randbereichs der Kühlvorrichtung der Randbereich verbessert von dem Material eingefasst werden, welches eine äußere Wandung des Batteriegehäuses bildet. Schließlich wird die Biege- und Torsionssteifigkeit des Batteriegehäuses durch den gegenüber der Kühlfläche abgewinkelten Randbereich verbessert.

Der abgewinkelte Randbereich und die Kühlfläche können einen Winkel von größer oder gleich 90 ° zueinander einschließen.

Der um die Kühlvorrichtung umlaufend ausgebildete abgewinkelte Randbereich kann durch Biegen des Randbereichs gegenüber der Kühlfläche abgewinkelt sein. Mit anderen Worten kann der abgewinkelte Randbereich monolithisch mit der Kühlvorrichtung verbunden sein.

Ein derart ausgebildetes Batteriegehäuse weist den Vorteil auf, dass das Batteriegehäuse vereinfacht herstellbar ist.

Vorzugsweise ist das Batteriegehäuse derart ausgebildet, dass sich die innere Wandung derart zwischen zwei gegenüberliegenden Wandungsabschnitten der äußeren Wandung erstreckt, dass das Aufnahmevolumen in zwei oder mehr Untervolumina unterteilt ist.

Ein derart ausgebildetes Batteriegehäuse weist den Vorteil auf, dass Batteriekomponenten mit einer gesteigerten Passgenauigkeit und einem festeren Sitz in dem Aufnahmevolumen bzw. in den Untervolumina des Aufnahmevolumens des Batteriegehäuses angeordnet werden können. Dadurch wird ein Kontakt zwischen den Batteriekomponenten und einer Kühlfläche der Kühlvorrichtung verbessert, sodass das Batteriegehäuse eine verbessert effiziente Kühlung der Batteriekomponenten ermöglicht.

Die innere Wandung kann sich derart zwischen zwei gegenüberliegenden Wandungsabschnitten der äußeren Wandung erstrecken, dass das Aufnahmevolumen in vier oder mehr Untervolumina unterteilt ist.

Die Untervolumina können gleich große Untervolumina sein.

Vorzugsweise ist das Batteriegehäuse derart ausgebildet, dass das Batteriegehäuse eine auf der Kühlfläche der Kühlvorrichtung angeordnete Verstärkungsstruktur aufweist, wobei die Verstärkungsstruktur zumindest einen ersten Verbindungsabschnitt aufweist, und wobei die Verstärkungsstruktur derart mit dem Batteriegehäuse verbunden ist, dass der erste Verbindungsabschnitt zumindest teilweise innerhalb der inneren Wandung angeordnet ist. Vorzugsweise ist der gesamte erste Verbindungsabschnitt innerhalb der inneren Wandung angeordnet.

Ein derart ausgebildetes Batteriegehäuse weist den Vorteil auf, dass das Batteriegehäuse eine gesteigerte Widerstandsfähigkeit gegen ein Kollabieren der Fluidkanäle während der Herstellung des Batteriegehäuses aufweist. In Folge der während der Herstellung des Batteriegehäuses, insbesondere während dem Um- und Überspritzen der Kühlvorrichtung, auf die Fluidkanäle der Kühlvorrichtung wirkenden thermischen und mechanischen Prozessbelastungen, können die Fluidkanäle sowohl an der Kühlfläche der Deckplatte als auch an der Unterseite der Basisplatte irreversibel mechanisch deformiert werden. Eine auf der Kühlfläche angeordnete Verstärkungsstruktur erhöht das Flächenträgheitsmoment der relevanten Querschnittsfläche, sodass das Batteriegehäuse eine gesteigerte Widerstandsfähigkeit gegen ein Kollabieren der Fluidkanäle während der Herstellung des Batteriegehäuses aufweist.

Der erste Verbindungsabschnitt der Verstärkungsstruktur kann einen Winkel von größer 0 ° zu der Kühlfläche der Kühlvorrichtung aufweisen.

Ein derart ausgebildetes Batteriegehäuse weist den Vorteil auf, dass der erste Verbindungsabschnitt verbessert von dem die innere Wandung bildendem Material umflossen werden kann, wenn das Batteriegehäuse hergestellt wird. Dadurch kann die Verbindung zwischen dem ersten Verbindungsabschnitt und der inneren Wandung verbessert werden, sodass das Batteriegehäuse eine verbesserte mechanische Festigkeit aufweist.

Die Verstärkungsstruktur kann mit der Kühlfläche der Kühlvorrichtung verschweißt sein.

Vorzugsweise ist das Batteriegehäuse derart ausgebildet, dass die Verstärkungsstruktur einen zweiten Verbindungsabschnitt aufweist, wobei der zweite Verbindungsabschnitt gegenüber dem ersten Verbindungsabschnitt abgewinkelt ist, und wobei die Verstärkungsstruktur mittels des zweiten Verbindungsabschnittes mit der Kühlfläche verbunden ist.

Ein derart ausgebildetes Batteriegehäuse weist den Vorteil auf, dass das Batteriegehäuse eine nochmals gesteigerte Widerstandsfähigkeit gegen ein Kollabieren der Fluidkanäle während der Herstellung des Batteriegehäuses aufweist. Durch einen zweiten Verbindungsabschnitt, der zu dem ersten Verbindungsabschnitt abgewinkelt angeordnet ist, wird das Flächenträgheitsmoment der relevanten Querschnittsfläche erhöht, sodass das Batteriegehäuse eine nochmals gesteigerte Widerstandsfähigkeit gegen ein Kollabieren der Fluidkanäle während der Herstellung des Batteriegehäuses aufweist.

Die Verstärkungsstruktur kann ein L-Profil, ein T-Profil oder ein U-Profil aufweisen. Der erste Verbindungsabschnitt und der zweite Verbindungsabschnitt können das L-Profil und/oder das T-Profil bilden.

Ein derart ausgebildetes Batteriegehäuse weist den Vorteil auf, dass das Batteriegehäuse eine nochmals gesteigerte Widerstandsfähigkeit gegen ein Kollabieren der Fluidkanäle während der Herstellung des Batteriegehäuses aufweist.

Die Verstärkungsstruktur kann einen dritten Verbindungsabschnitt aufweisen, der im Wesentlichen parallel zu dem ersten Verbindungsabschnitt angeordnet ist und mit dem zweiten Verbindungsabschnitt verbunden ist, sodass der erste Verbindungsabschnitt, der zweite Verbindungsabschnitt und der dritte Verbindungsabschnitt das U-Profil bilden.

Der erste Verbindungsabschnitt und/oder der zweite Verbindungsabschnitt kann/können eine Dickenerstreckung von größer oder gleich 1 mm aufweisen.

Der erste Verbindungsabschnitt und/oder der zweite Verbindungsabschnitt kann/können eine Breitenerstreckung von kleiner oder gleich 10 mm, vorzugsweise von kleiner oder gleich 5 mm, aufweisen.

Vorzugsweise ist das Batteriegehäuse derart ausgebildet, dass der erste Verbindungsabschnitt Durchgangsöffnungen aufweist, die von dem die innere Wandung bildenden Material ausgefüllt sind.

Ein derart ausgebildetes Batteriegehäuse weist den Vorteil auf, dass dieses vereinfacht herstellbar ist. Insbesondere kann die innere Wandung des Batteriegehäuses bildendes Material durch die Durchgangsöffnungen des ersten Verbindungsabschnittes der Verstärkungsstruktur fließen, während das Batteriegehäuse hergestellt wird. Dadurch kann eine verbesserte Verbindung zwischen der Kühlvorrichtung und der inneren Wandung des Batteriegehäuses erreicht werden.

Ein freier Querschnitt der Durchgangsöffnungen kann kreisförmig, rechteckförmig, langlochförmig oder rautenförmig ausgebildet sein. Der freie Querschnitt kann einen Durchmesser aufweisen, der so große wie eine Dickenerstreckung inneren Wandung des Batteriegehäuses ist.

Vorzugsweise weisen die Durchgangsöffnungen äquidistante **Ab**stände zueinander auf. Der Abstand zwischen zwei Durchgangöffnungen beträgt vorzugsweise das 2,5-fache einer Dickenerstreckung der inneren Wandung des Batteriegehäuses, mit welcher die Kühlvorrichtung verbunden ist.

Ein derart ausgebildetes Batteriegehäuse weist den Vorteil auf, dass dieses eine verbesserte Verbindung zwischen der inneren Wandung und der Kühlvorrichtung aufweist. Dadurch weist das Batteriegehäuse eine verbesserte mechanische Festigkeit auf.

Vorzugsweise ist das Batteriegehäuse derart ausgebildet, dass eine Stützstruktur in einem freien Querschnitt des Fluidkanals angeordnet ist.

Ein derart ausgebildetes Batteriegehäuse weist den Vorteil auf, dass das Batteriegehäuse eine gesteigerte Widerstandsfähigkeit gegen Kollabieren der Fluidkanäle während der Herstellung des Batteriegehäuses aufweist. Die in dem Fluidkanal angeordnete Stützstruktur wirkt den mechanischen Belastungen während der Herstellung des Batteriegehäuses entgegen, sodass ein Kollabieren des Fluidkanals vermieden werden kann. Ferner kann durch die Stützstruktur ein gerichtetes Fließen von Kühlfluid im Fluidkanal unterstützt werden, so dass die Kühlleistung der Kühlvorrichtung verbessert ist.

Vorzugsweise erstreckt sich die Stützstruktur nicht über eine gesamte Längserstreckung des Fluidkanals.

Vorzugsweise ist das Batteriegehäuse derart ausgebildet, dass die Stützstruktur in einem Querschnitt eine Wellenform oder eine Rechteckform aufweist.

Ein derart ausgebildetes Batteriegehäuse weist den Vorteil auf, dass das Batteriegehäuse eine nochmals gesteigerte Widerstandsfähigkeit gegen Kollabieren der Fluidkanäle während der Herstellung des Batteriegehäuses aufweist.

Vorzugsweise ist das Batteriegehäuse derart ausgebildet, dass ein freier Querschnitt des Fluidkanals eine Breitenerstreckung von kleiner oder gleich 21 mm aufweist.

Ein derart ausgebildetes Batteriegehäuse weist den Vorteil auf, dass das Batteriegehäuse eine gesteigerte Widerstandsfähigkeit gegen Kollabieren der Fluidkanäle während der Herstellung des Batteriegehäuses aufweist. Durch eine Verringerung der Breitenerstreckung des freien Querschnitts kann ein erhöhtes Flächenträgheitsmoment der relevanten Querschnittsfläche erreicht werden. Dadurch kann die Widerstandsfähigkeit gegen Kollabieren der Fluidkanäle gesteigert werden.

Der freie Querschnitt des Fluidkanals kann eine Breitenerstreckung von kleiner oder gleich 19 mm aufweisen, vorzugsweise von kleiner oder gleich 15 mm, weiter vorzugsweise von kleiner oder gleich 12 mm.

Vorzugsweise ist das Batteriegehäuse derart ausgebildet, dass in dem Fluidkanal eine Kanalteilungseinrichtung angeordnet ist, die einen freien Querschnitt des Fluidkanals zumindest abschnittweise in zwei voneinander getrennte freie Unterquerschnitte aufteilt.

Ein derart ausgebildetes Batteriegehäuse weist den Vorteil auf, dass das Batteriegehäuse eine gesteigerte Widerstandsfähigkeit gegen Kollabieren der Fluidkanäle während der Herstellung des Batteriegehäuses aufweist. Durch eine Kanalteilungseinrichtung kann die Breitenerstreckung des freien Querschnitts des Fluidkanals verringert werden, sodass wiederum ein erhöhtes Flächenträgheitsmoment der relevanten Querschnittsfläche erreicht werden kann. Dadurch kann die Widerstandsfähigkeit gegen Kollabieren der Fluidkanäle gesteigert werden.

Die Kanalteilungseinrichtung kann derart in dem Fluidkanal angeordnet sein, dass die Kanalteilungseinrichtung einen freien Querschnitt in zwei voneinander getrennte freie, gleich große Unterquerschnitte aufteilt.

Die Kanalteilungseinrichtung kann derart in dem Fluidkanal angeordnet sein, dass die Kanalteilungseinrichtung einen Abstand zu einer Wandung des Fluidkanals in der Breitenerstreckungsrichtung des Fluidkanals von größer oder gleich 21 mm aufweist.

Die Kanalteilungseinrichtung kann derart in dem Fluidkanal angeordnet sein, dass die Kanalteilungseinrichtung jeweils einen Abstand von größer oder gleich 21 mm in der Breitenerstreckungsrichtung des Fluidkanals zu zwei sich gegenüberliegenden Wandungen des Fluidkanals aufweist.

Die Kanalteilungseinrichtung kann im Bereich des Zulaufanschlusses und/oder im Bereich des Ablaufanschlusses in einem freien Querschnitt des Fluidkanals angeordnet sein.

Ein derart ausgebildetes Batteriegehäuse weist den Vorteil auf, dass ein Fließwiderstand das Fluidkanals im Bereich des Zulaufanschlusses und/oder des Ablaufanschlusses reduziert ist.

Die Unterseite der Basisplatte kann im Bereich des Fluidkanals in Richtung der Deckplatte unter Ausbildung der Kanalteilungseinrichtung eingewölbt sein und mit der Deckplatte verbunden sein.

Ein derart ausgebildetes Batteriegehäuse weist den Vorteil auf, dass das Batteriegehäuse vereinfacht herstellbar ist. Insbesondere ist die Kühlvorrichtung des Batteriegehäuse mit einer verringerten Anzahl Fertigungsschritten herstellbar.

Die Kanalteilungseinrichtung kann eine Breitenerstreckung von größer oder gleich 3 mm aufweisen, vorzugsweise eine Breitenerstreckung von größer oder gleich 5 mm und besonders bevorzugt eine Breitenerstreckung von größer oder gleich 7 mm.

Vorzugsweise ist das Batteriegehäuse derart ausgebildet, dass der um die Kühlvorrichtung umlaufende Randbereich Durchgangsöffnungen aufweist, die von dem die äußere Wandung bildenden Material ausgefüllt sind.

Das entsprechend ausgebildete Batteriegehäuse weist den Vorteil auf, dass dieses vereinfacht herstellbar ist. Insbesondere kann die äußere Wandung des Batteriegehäuses bildendes Material durch die Durchgangsöffnungen des Randbereichs fließen, während das Batteriegehäuse hergestellt wird. Dadurch kann eine verbesserte Verbindung zwischen der Kühlvorrichtung und der äußeren Wandung des Batteriegehäuses erreicht werden.

Ein freier Querschnitt der Durchgangsöffnungen kann kreisförmig, rechteckförmig, langlochförmig oder rautenförmig ausgebildet sein. Der freie Querschnitt kann einen Durchmesser aufweisen, der so große wie eine Dickenerstreckung äußeren Wandung des Batteriegehäuses ist, mit welcher die Kühlvorrichtung verbunden ist.

Vorzugsweise weisen die Durchgangsöffnungen äquidistante Abstände zueinander auf. Der Abstand zwischen zwei Durchgangöffnungen beträgt vorzugsweise das 2,5-fache einer Dickenerstreckung der äußeren Wandung des Batteriegehäuses, mit welcher die Kühlvorrichtung verbunden ist.

Ein derart ausgebildetes Batteriegehäuse weist den Vorteil auf, dass dieses eine verbesserte Verbindung zwischen der äußeren Wandung und der Kühlvorrichtung aufweist. Dadurch weist das Batteriegehäuse einen nochmals verbesserten Schutz vor Auslaufen von Kühlfluid auf.

Vorzugsweise ist das Batteriegehäuse derart ausgebildet, dass die Deckplatte eine Dickenerstreckung von größer oder gleich 0,8 mm aufweist, und/oder die Basisplatte eine Dickenerstreckung von größer oder gleich 0,6 mm aufweist.

Ein derart ausgebildetes Batteriegehäuse weist den Vorteil auf, dass das Batteriegehäuse eine gesteigerte Widerstandsfähigkeit gegen ein Kollabieren der Fluidkanäle während der Herstellung des Batteriegehäuses aufweist.

Die Deckplatte kann eine Dickenerstreckung von größer oder gleich 0,9 mm aufweisen, vorzugsweise von größer oder gleich 1,0 mm aufweisen.

Die Basisplatte kann eine Dickenerstreckung von größer oder gleich 0,7 mm aufweisen, vorzugsweise von größer oder gleich 0,8 mm aufweisen.

Der vorliegenden Erfindung liegt weiterhin die Aufgabe zugrunde, eine Batterie mit einer Kühlvorrichtung mit einem verbesserten Schutz vor Auslaufen von Kühlfluid und gleichzeitig verbesserten mechanischen Eigenschaften, insbesondere einer verbesserten Widerstandsfähigkeit gegen Temperatur- und Druckbelastungen während der Herstellung, bereitzustellen.

Die der vorliegenden Erfindung zugrundeliegende Aufgabe wird durch eine Batterie mit den Merkmalen des Anspruchs 12 gelöst.

Im Genaueren wird die der vorliegenden Erfindung zugrundeliegende Aufgabe durch eine Batterie aufweisend zumindest eine Batteriekomponente gelöst, wobei die Batterie ein Batteriegehäuse nach einem der vorhergehenden Ansprüche aufweist, und wobei die zumindest eine Batteriekomponente in dem Aufnahmevolumen des Batteriegehäuses angeordnet ist und mit der Kühlfläche der Kühlvorrichtung in Kontakt steht.

Die erfindungsgemäße Batterie weist den Vorteil auf, dass eine effiziente Kühlung von Batteriekomponenten (z.B. Batteriezellen und/oder Batteriemodule) der Batterie ermöglicht ist. Ferner weist die erfindungsgemäße Batterie den Vorteil auf, dass diese einen verbesserten Schutz vor Auslaufen von Kühlfluid aus der Kühlvorrichtung aufweist. Dadurch, dass der gesamte Randbereich der Kühlvorrichtung innerhalb der äußeren Wandung des Batteriegehäuses angeordnet ist, kann Kühlfluid nicht in das Aufnahmevolumen gelangen. Somit sind die Batteriekomponenten der Batterie vor dem Kühlfluid geschützt, so dass ein verbesserter Schutz vor einem Kurzschluss der Batterie besteht. Schließlich weist die erfindungsgemäße Batterie eine verbesserte mechanische Festigkeit aufgrund der inneren Wandung des Batteriegehäuses auf.

Der vorliegenden Erfindung liegt weiterhin die Aufgabe zugrunde, ein Verfahren zur Herstellung eines zuvor beschriebenen Batteriegehäuses bereitzustellen.

Die der vorliegenden Erfindung zugrundeliegende Aufgabe wird durch ein Verfahren mit den Merkmalen des Anspruchs 13 gelöst.

Vorteilhafte Ausgestaltungen des Verfahrens sind in den von Anspruch 13 abhängigen Ansprüchen beschrieben.

Im Genaueren wird die der vorliegenden Erfindung zugrundeliegende Aufgabe gelöst durch ein Verfahren zur Herstellung eines zuvor beschriebene Batteriegehäuses, wobei das Verfahren die folgenden Verfahrensschritte aufweist:
- Bereitstellen eines Formwerkzeugs, vorzugsweise eines Spritzgießwerkzeugs, wobei das Formwerkzeug zumindest zwei Werkzeugteile aufweist;
- Bereitstellen der Kühlvorrichtung, wobei die Kühlvorrichtung einen Fluidkanal aufweist;
- Einbringen der Kühlvorrichtung in ein erstes Werkzeugteil des Formwerkzeugs;
- Schließen des Formwerkzeugs durch aufeinander zu Bewegen der zumindest zwei Werkzeugteile bis diese miteinander in Kontakt stehen und eine Kavität zum Befüllen mit einem thermoplastischen Material bilden, wobei die Kühlvorrichtung innerhalb der Kavität angeordnet ist;
- Befüllen der Kavität mit einem thermoplastischen Material, sodass der gesamte Randbereich der Kühlvorrichtung von die äußere Wandung des Batteriegehäuses bildenden Material umschlossen wird;
- Öffnen des Formwerkzeugs und Entnehmen des fertigen Batteriegehäuses.

Das erfindungsgemäße Verfahren weist den Vorteil auf, dass das Batteriegehäuse, insbesondere die äußere Wandung und die innere Wandung des Batteriegehäuses, in einem Verfahrensschritt herstellbar ist/sind.

Vorzugsweise ist das Verfahren derart ausgebildet, dass das Verfahren vor dem Schließen des Formwerkzeugs die folgenden Verfahrensschritte aufweist:
- Befüllen des Fluidkanals der Kühlvorrichtung mit einem Fluid, vorzugsweise mit Wasser; und
- Schließen des Fluidkanals derart, dass das Fluid nicht aus dem Fluidkanal austreten kann;
und wobei das Verfahren vorzugsweise vor dem Öffnen des Formwerkzeugs den folgenden Verfahrensschritt aufweist:
- Entleeren des Fluidkanals der Kühlvorrichtung.

Ein derart ausgebildetes Verfahren weist den Vorteil auf, dass während der Herstellung des Batteriegehäuses eine gesteigerte Widerstandsfähigkeit gegen Kollabieren der Fluidkanäle erreichbar ist. Dadurch, dass die Fluidkanäle vor dem Schließen der zwei Werkzeughälften und vor dem Befüllen von thermoplastischem Material in die Kavität mit einem Fluid befüllt werden und dieses in dem Fluidkanal verbleibt, besteht kein Hohlraum in der Kühlvorrichtung durch den freien Querschnitt des Fluidkanals, sodass dieser durch die wirkenden mechanischen Belastungen nicht deformiert wird.

Vorzugsweise weist das erste Werkzeugteil einen Aufnahmebereich zur Aufnahme der Kühlvorrichtung auf, wobei der Aufnahmebereich zumindest abschnittsweise eine der Unterseite der Basisplatte der Kühlvorrichtung korrespondierende Oberflächenkontur aufweist und wobei das Verfahren den folgenden Verfahrensschritt aufweist:
- Einbringen der Kühlvorrichtung in das erste Werkzeugteil des Formwerkzeugs derart, dass die Unterseite der Basisplatte der Kühlvorrichtung mit im Wesentlichen der gesamten Oberfläche der Unterseite in flächigem Oberflächenkontakt mit der Oberflächenkontur des Aufnahmebereichs des ersten Werkzeugteils steht.

Ein derart ausgebildetes Verfahren weist den Vorteil auf, dass während der Herstellung des Batteriegehäuses eine gesteigerte Widerstandsfähigkeit gegen Kollabieren der Fluidkanäle erreichbar ist. Dadurch, dass die Unterseite der Basisplatte in flächigem Kontakt mit dem Aufnahmebereich des ersten Werkzeugteils steht, können auf die Fluidkanäle der Kühlvorrichtung wirkende Kräfte während der Herstellung aufgenommen werden, sodass die Fluidkanäle durch das erste Werkzeugteil gestützt werden.

Weitere Vorteile, Einzelheiten und Merkmale der Erfindung ergeben sich nachfolgend aus den erläuterten Ausführungsbeispielen. Dabei zeigen im Einzelnen:
- Figur 1:: ein Batteriegehäuse gemäß einer ersten Ausführungsform in einer perspektivischen Ansicht,
- Figur 2:: eine Kühlvorrichtung des Batteriegehäuses gemäß der ersten Ausführungsform in einer perspektivischen Ansicht,
- Figur 3:: eine Schnittansicht des Batteriegehäuses gemäß der ersten Ausführungsform im Verbindungsbereich zwischen einem Randbereich der Kühlvorrichtung und der äußeren Wandung,
- Figur 4:: eine Schnittansicht des Batteriegehäuses gemäß einer zweiten Ausführungsform im Bereich eines Fluidkanals der Kühlvorrichtung des Batteriegehäuses,
- Figur 5:: eine Schnittansicht eines Batteriegehäuses gemäß einer dritten Ausführungsform im Bereich eines Fluidkanals der Kühlvorrichtung des Batteriegehäuses,
- Figur 6:: eine Schnittansicht eines Batteriegehäuses gemäß einer vierten Ausführungsform im Bereich eines Fluidkanals der Kühlvorrichtung des Batteriegehäuses,
- Figur 7:: eine perspektivische Ansicht des Batteriegehäuses gemäß der vierten Ausführungsform im Bereich des Fluidkanals der Kühlvorrichtung des Batteriegehäuses, und
- Figur 8:: eine perspektivische Ansicht eines ersten Werkzeugteils eines Formwerkzeugs zur Herstellung des Batteriegehäuses gemäß der ersten Ausführungsform.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

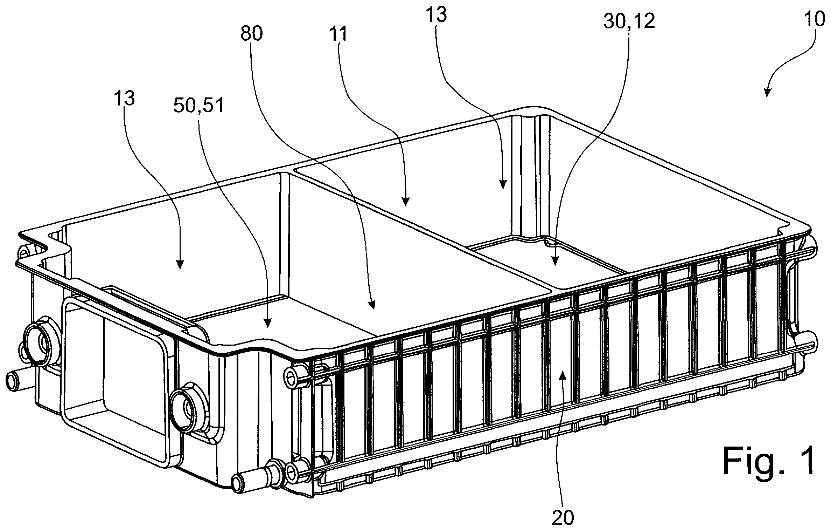

Figur 1 zeigt ein Batteriegehäuse 10 gemäß einer ersten Ausführungsform in einer perspektivischen Ansicht. Das Batteriegehäuse 10 weist eine ein Aufnahmevolumen 11 zumindest teilweise umschließende äußere Wandung 20 und eine Kühlvorrichtung 30 auf. Die Kühlvorrichtung 30 weist eine in Figur 1 nicht sichtbare eine erste Verbindungsfläche 42 aufweisende Basisplatte 40 und eine eine zweite Verbindungsfläche 52 aufweisende Deckplatte 50 auf, wobei die zweite Verbindungsfläche 52 in Figur 1 ebenfalls nicht sichtbar ist. Die Verbindungsflächen 42, 52 der Basisplatte 40 und der Deckplatte 50 sind zumindest in einem in Figur 1 nicht sichtbaren um die Kühlvorrichtung 30 angeordneten Randbereich 60 derart miteinander stoffschlüssig verbunden, dass ein in Figur 1 nicht sichtbarer Fluidkanal 70 zum Durchleiten eines Kühlfluids zwischen der Basisplatte 40 und der Deckplatte 50 gebildet ist. Die Kühlvorrichtung 30 ist derart mit dem Batteriegehäuse 10 verbunden, dass der gesamte Randbereich 60 der Kühlvorrichtung 30 innerhalb der äußeren Wandung 20 des Batteriegehäuses 10 angeordnet ist, und die Kühlvorrichtung den Gehäuseboden 12 des Batteriegehäuses 10 bildet. Das Batteriegehäuse 10 weist zumindest eine mit der äußeren Wandung 20 verbundene innere Wandung 80 auf die sich zwischen zwei gegenüberliegenden Wandungsabschnitten der äußeren Wandung 20 erstreckt, und zumindest abschnittweise mit einer Kühlfläche 51 der Kühlvorrichtung 30 verbunden ist.

Die innere Wandung 80 erstreckt sich derart zwischen zwei gegenüberliegenden Wandungsabschnitten der äußeren Wandung 20, dass das Aufnahmevolumen 11 in zwei gleich große Untervolumina 13 unterteilt ist.

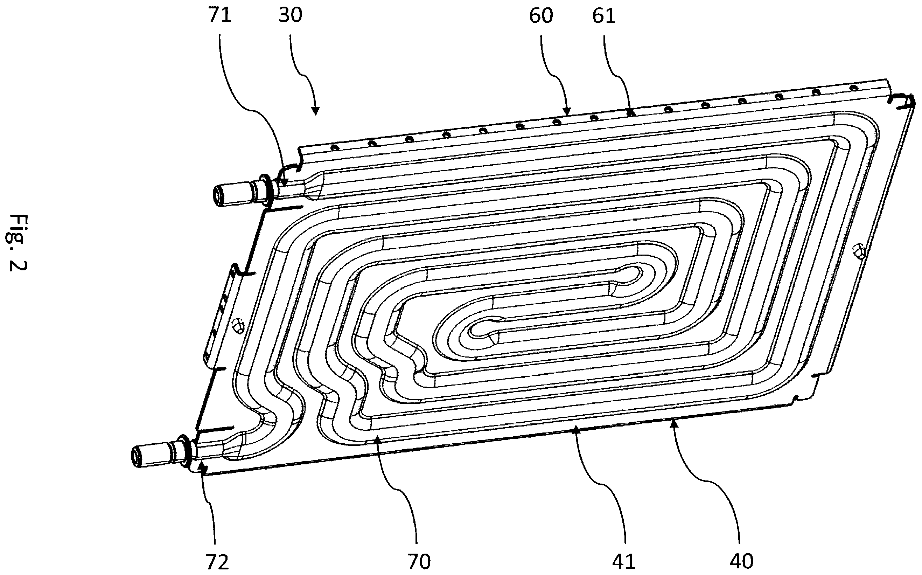

Figur 2 zeigt eine Kühlvorrichtung 30 des Batteriegehäuses 10 gemäß der ersten Ausführungsform in einer perspektivischen Ansicht. Die Basisplatte 40 weist eine der in Figur 2 nicht sichtbaren ersten Verbindungsfläche 42 gegenüberliegend angeordnete Unterseite 41 auf. Die Unterseite 41 der Basisplatte 40 ist unter Ausbildung des Fluidkanals 70 ausgewölbt ausgebildet.

Der Fluidkanal 70 ist meanderförmig zwischen der Basisplatte 40 und der Deckplatte 50 gebildet und mit einem Zulaufanschluss 71 und einem Ablaufanschluss 72 fluidverbunden.

Der um die Kühlvorrichtung 30 umlaufende Randbereich 60 ist gegenüber der Kühlfläche 51 der Deckplatte 50 abgewinkelt, wobei der abgewinkelte Randbereich 60 und die Kühlfläche 51 einen Winkel von 90 ° zueinander einschließen. Der um die Kühlvorrichtung 30 umlaufende Randbereich 60 weist Durchgangsöffnungen 61 auf.

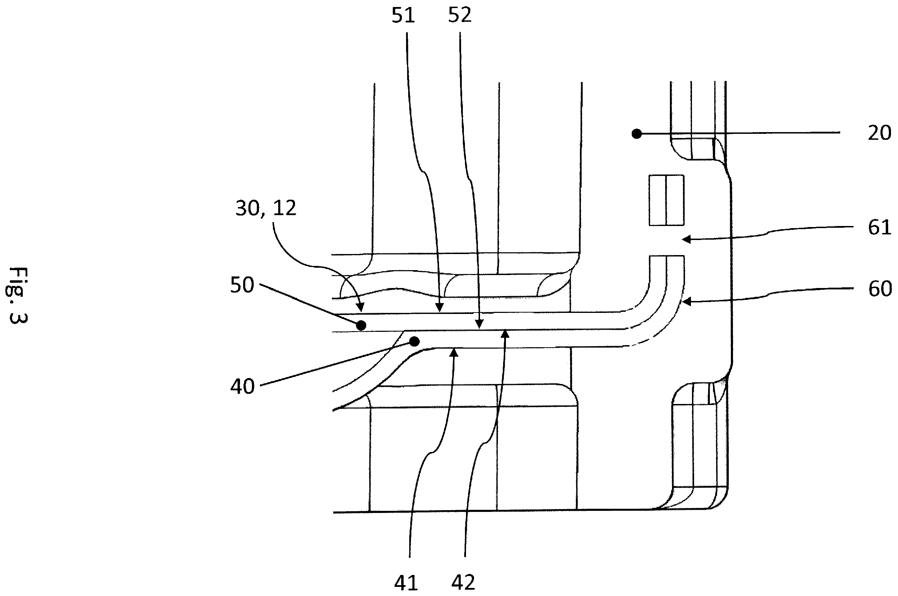

Figur 3 zeigt eine Schnittansicht des Batteriegehäuses 10 gemäß der ersten Ausführungsform im Verbindungsbereich zwischen einem Randbereich 60 der Kühlvorrichtung 30 und der äußeren Wandung 20. Die Kühlvorrichtung 30 bildet dabei den Gehäuseboden 12 des Batteriegehäuses 10.

Die Verbindungsfläche 42 der Basisplatte 40 ist der Verbindungsfläche 52 der Deckplatte 50 gegenüberliegend angeordnet und mit dieser verbunden. Der gegenüber der Kühlfläche 51 der Deckplatte 50 abgewinkelte Randbereich 60 ist vollständig innerhalb der Wandung 120 des Batteriegehäuses 10 angeordnet. Die Durchgangöffnungen 61 des Randbereichs 60 der Kühlvorrichtung 30 sind von Material der äußeren Wandung 20 ausgefüllt.

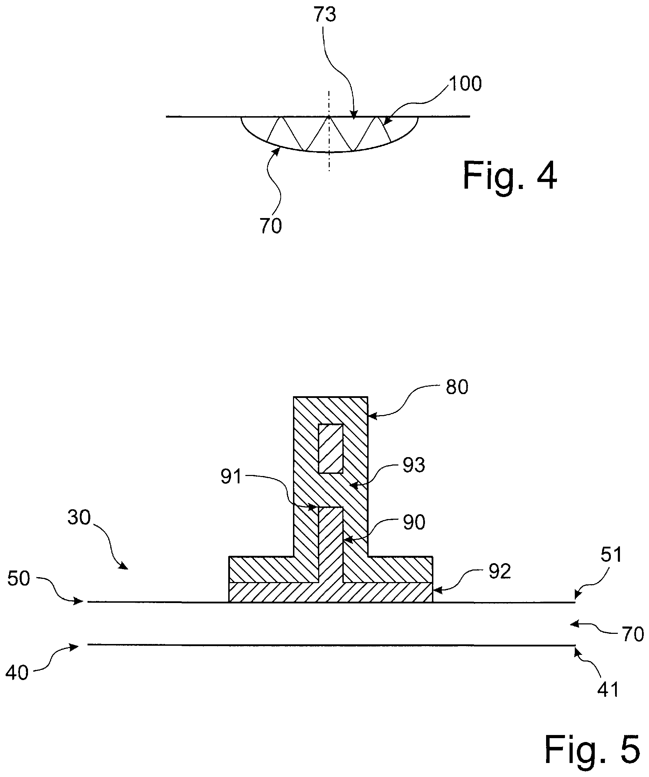

Figur 4 zeigt eine Schnittansicht eines Batteriegehäuses 10 gemäß einer zweiten Ausführungsform im Bereich eines Fluidkanals 70 der Kühlvorrichtung 30 des Batteriegehäuses 10. In einem freien Querschnitt 73 des Fluidkanals 70 ist eine Stützstruktur 100 angeordnet. Die Stützstruktur 100 weist in einem Querschnitt eine Wellenform auf.

Figur 5 zeigt eine Schnittansicht eines Batteriegehäuses 10 gemäß einer dritten Ausführungsform im Bereich eines Fluidkanals 70 der Kühlvorrichtung 30 des Batteriegehäuses 10. Das Batteriegehäuse 10 weist eine auf der Kühlfläche 51 der Kühlvorrichtung 30 angeordnete Verstärkungsstruktur 90 auf, wobei die Verstärkungsstruktur 90 zumindest einen ersten Verbindungsabschnitt 91 aufweist und die Verstärkungsstruktur 90 derart mit dem Batteriegehäuse 10 verbunden ist, dass der gesamte erste Verbindungsabschnitt 91 innerhalb der inneren Wandung 80 angeordnet ist.

Die Verstärkungsstruktur 90 weist einen zweiten Verbindungsabschnitt 92 auf, wobei der zweite Verbindungsabschnitt 92 gegenüber dem ersten Verbindungsabschnitt 91 abgewinkelt ist und wobei die Verstärkungsstruktur 90 mittels des zweiten Verbindungsabschnittes 92 mit der Kühlfläche 51 der Kühlvorrichtung 30 verbunden ist.

Der erste Verbindungsabschnitt 91 weist Durchgangsöffnungen 93 auf und ist im Bereich der Durchgangsöffnungen 93 von Material der inneren Wandung 80 des Batteriegehäuses 10 durchdrungen.

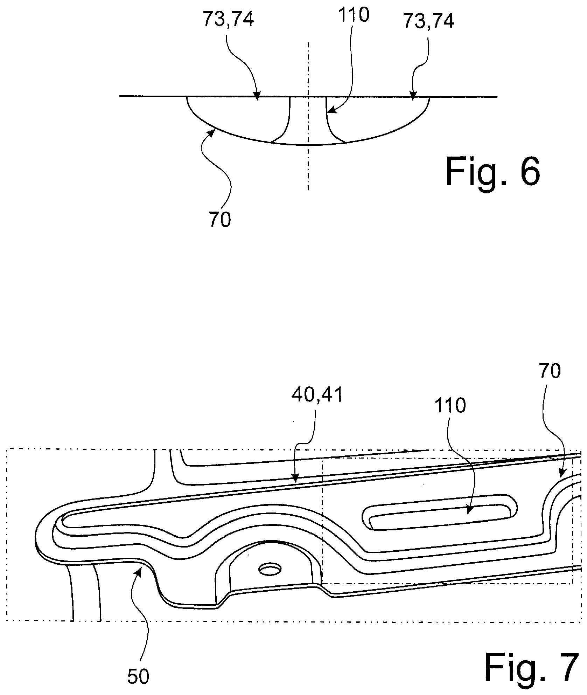

Figur 6 zeigt eine Schnittansicht eines Batteriegehäuses 10 gemäß einer vierten Ausführungsform im Bereich eines Fluidkanals 70 der Kühlvorrichtung 30 des Batteriegehäuses 10. In dem Fluidkanal 70 ist eine Kanalteilungseinrichtung 110 angeordnet, die einen freien Querschnitt 73 des Fluidkanals 70 in zwei voneinander getrennte freie Unterquerschnitte 74 aufteilt. Die freien Unterquerschnitte 74 sind gleich groß. Die Kanalteilungseinrichtung 110 ist derart in dem Fluidkanal 70 angeordnet, dass die Kanalteilungseinrichtung 110 jeweils den gleichen Abstand in der Breitenerstreckungsrichtung des Fluidkanals 70 zu zwei sich gegenüberliegenden Wandungen des Fluidkanals 70 aufweist.

Figur 7 zeigt eine perspektivische Ansicht des Batteriegehäuses 10 gemäß der vierten Ausführungsform im Bereich des Fluidkanals 70 der Kühlvorrichtung 30 des Batteriegehäuses 10. Die Unterseite 41 der Basisplatte 40 ist im Bereich des Fluidkanals 70 in Richtung der Deckplatte 50 unter Ausbildung der Kanalteilungseinrichtung 110 eingewölbt und mit der Deckplatte 50 verbunden.

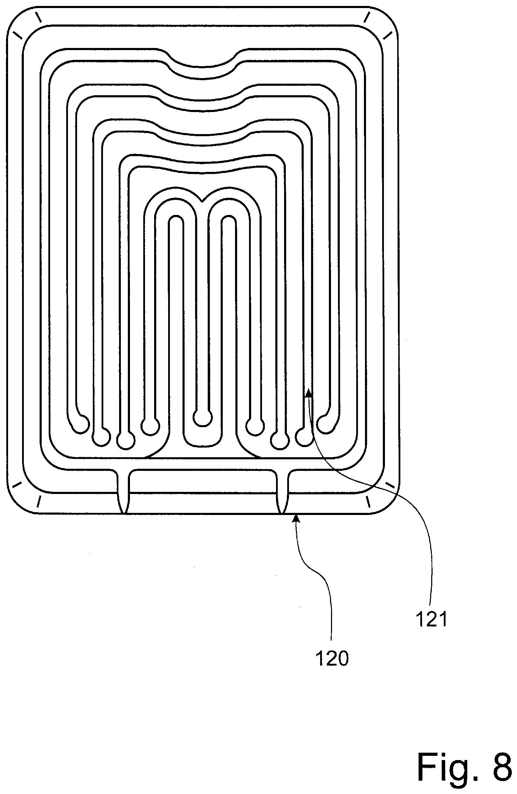

Figur 8 zeigt eine perspektivische Ansicht eines ersten Werkzeugteils 120 eines Formwerkzeugs zur Herstellung des Batteriegehäuses 10 gemäß der ersten Ausführungsform. Das erste Werkzeugteil 120 weist einen Aufnahmebereich 121 auf, wobei der Aufnahmebereich 121 eine der Unterseite 41 der Basisplatte 40 der Kühlvorrichtung 30 korrespondierende Oberflächenkontur aufweist.

### Bezugszeichenliste

- 10: Batteriegehäuse
- 11: Aufnahmevolumen
- 12: Gehäuseboden
- 20: äußere Wandung (des Batteriegehäuses)
- 30: Kühlvorrichtung
- 40: Basisplatte (der Kühlvorrichtung)
- 41: Unterseite (der Basisplatte)
- 42: Erste Verbindungsfläche (der Basisplatte)
- 50: Deckplatte (der Kühlvorrichtung)
- 51: Kühlfläche (der Deckplatte)
- 52: Zweite Verbindungsfläche (der Deckplatte)
- 60: Randbereich (der Kühlvorrichtung)
- 61: Durchgangsöffnung (des Randbereichs der Kühlvorrichtung)
- 70: Fluidkanal
- 71: Zulaufanschluss
- 72: Ablaufanschluss
- 73: freier Querschnitt (des Fluidkanals)
- 74: Unterquerschnitt (des freien Querschnitts des Fluidkanals)
- 80: innere Wandung (des Batteriegehäuses)
- 90: Verstärkungsstruktur
- 91: Erster Verbindungsabschnitt (der Verstärkungsstruktur)
- 92: Zweiter Verbindungsabschnitt (der Verstärkungsstruktur)
- 93: Durchgangsöffnungen (des ersten Verbindungsabschnittes)
- 100: Stützstruktur
- 110: Kanalteilungseinrichtung
- 120: Erstes Werkzeugteil
- 121: Aufnahmebereich (des ersten Werkzeugteils)

## Patentansprüche

1. Batteriegehäuse (10) zur Aufnahme von zumindest einer Batteriekomponente, wobei das Batteriegehäuse (10) folgende Merkmale aufweist:
- das Batteriegehäuse (10) weist eine ein Aufnahmevolumen (11) zumindest teilweise umschließende äußere Wandung (20) auf;
- das Batteriegehäuse (10) weist eine Kühlvorrichtung (30) auf;
- die Kühlvorrichtung (30) weist eine eine erste Verbindungsfläche (42) aufweisende Basisplatte (40) und eine eine zweite Verbindungsfläche (52) aufweisende Deckplatte (50) auf;
- die Verbindungsflächen (42, 52) der Basisplatte (40) und der Deckplatte (50) sind zumindest in einem um die Kühlvorrichtung (30) umlaufend ausgebildeten Randbereich (60) derart miteinander stoffschlüssig verbunden, dass ein Fluidkanal (70) zum Durchleiten eines Kühlfluids zwischen der Basisplatte (40) und der Deckplatte (50) gebildet ist;
- die Kühlvorrichtung (30) ist derart mit dem Batteriegehäuse (10) verbunden, dass der gesamte Randbereich (60) der Kühlvorrichtung (30) innerhalb der äußeren Wandung (20) des Batteriegehäuses (10) angeordnet ist;
- die Kühlvorrichtung (30) bildet zumindest einen Teil des Gehäusebodens (12) des Batteriegehäuses (10);
- das Batteriegehäuse (10) weist zumindest eine mit der äußeren Wandung (20) verbundene innere Wandung (80) auf;
- die innere Wandung (80) erstreckt sich zwischen zwei Wandungsabschnitten der äußeren Wandung (20); und
- die innere Wandung (80) des Batteriegehäuses (10) ist zumindest abschnittweise mit einer dem Aufnahmevolumen (11) zugewandten Kühlfläche (51) der Kühlvorrichtung (30) in Kontakt.

2. Batteriegehäuse (10) nach Anspruch 1, **dadurch gekennzeichnet, dass** sich die innere Wandung (80) derart zwischen zwei gegenüberliegenden Wandungsabschnitten der äußeren Wandung (20) erstreckt, dass das Aufnahmevolumen (11) in zwei oder mehr Untervolumina (13) unterteilt ist.

3. Batteriegehäuse (10) nach einem der vorhergehenden Ansprüche, durch die folgenden Merkmale **gekennzeichnet:**
- das Batteriegehäuse (10) weist eine auf der Kühlfläche (51) der Kühlvorrichtung (30) angeordnete Verstärkungsstruktur (90) auf;
- die Verstärkungsstruktur (90) weist zumindest einen ersten Verbindungsabschnitt (91) auf; und
- die Verstärkungsstruktur (90) ist derart mit dem Batteriegehäuse (10) verbunden, dass der erste Verbindungsabschnitt (91) zumindest teilweise innerhalb der inneren Wandung (80) angeordnet ist.

4. Batteriegehäuse (10) nach Anspruch 3, **dadurch gekennzeichnet, dass** die Verstärkungsstruktur (90) einen zweiten Verbindungsabschnitt (92) aufweist, wobei der zweite Verbindungsabschnitt (92) gegenüber dem ersten Verbindungsabschnitt (91) abgewinkelt ist, und wobei die Verstärkungsstruktur (90) mittels des zweiten Verbindungsabschnittes (92) mit der Kühlfläche (51) verbunden ist.

5. Batteriegehäuse (10) nach einem der Ansprüche 3 oder 4, **dadurch gekennzeichnet, dass** der erste Verbindungsabschnitt (91) Durchgangsöffnungen (93) aufweist, die von dem die innere Wandung (80) bildenden Material ausgefüllt sind.

6. Batteriegehäuse (10) nach einem der vorhergehenden Ansprüche, **dadurch gekennzeichnet, dass** eine Stützstruktur (100) in einem freien Querschnitt (73) des Fluidkanals (70) angeordnet ist.

7. Batteriegehäuse (10) nach Anspruch 6, **dadurch gekennzeichnet, dass** die Stützstruktur (100) in einem Querschnitt eine Wellenform oder eine Rechteckform aufweist.

8. Batteriegehäuse (10) nach einem der vorhergehenden Ansprüche, **dadurch gekennzeichnet, dass** ein freier Querschnitt des Fluidkanals (70) eine Breitenerstreckung von kleiner oder gleich 21 mm aufweist.

9. Batteriegehäuse (10) nach einem der vorhergehenden Ansprüche, **dadurch gekennzeichnet, dass** in dem Fluidkanal (70) eine Kanalteilungseinrichtung (110) angeordnet ist, die einen freien Querschnitt (73) des Fluidkanals (70) zumindest abschnittweise in zwei voneinander getrennte freie Unterquerschnitte (74) aufteilt.

10. Batteriegehäuse (10) nach einem der vorhergehenden Ansprüche, **dadurch gekennzeichnet, dass** der um die Kühlvorrichtung (30) umlaufende Randbereich (60) Durchgangsöffnungen (61) aufweist, die von dem die äußere Wandung (20) bildenden Material ausgefüllt sind.

11. Batteriegehäuse (10) nach einem der vorhergehenden Ansprüche, durch die folgenden Merkmale **gekennzeichnet:**
- die Deckplatte (50) weist eine Dickenerstreckung von größer oder gleich 0,8 mm auf; und/oder
- die Basisplatte (40) weist eine Dickenerstreckung von größer oder gleich 0,6 mm auf.

12. Batterie aufweisend zumindest eine Batteriekomponente, wobei die Batterie folgende Merkmale aufweist:
- die Batterie weist ein Batteriegehäuse (10) nach einem der vorhergehenden Ansprüche auf; und
- die zumindest eine Batteriekomponente ist in dem Aufnahmevolumen (11) des Batteriegehäuses (10) angeordnet und steht mit der Kühlfläche (51) der Kühlvorrichtung (30) in Kontakt.

13. Verfahren zur Herstellung eines Batteriegehäuses (10) nach einem der Ansprüche 1 bis 11, wobei das Verfahren die folgenden Verfahrensschritte aufweist:
- Bereitstellen eines Formwerkzeugs, vorzugsweise eines Spritzgießwerkzeugs, wobei das Formwerkzeug zumindest zwei Werkzeugteile aufweist;
- Bereitstellen der Kühlvorrichtung (30), wobei die Kühlvorrichtung (30) einen Fluidkanal (70) aufweist;
- Einbringen der Kühlvorrichtung (30) in ein erstes Werkzeugteil (120) des Formwerkzeugs;
- Schließen des Formwerkzeugs durch aufeinander zu Bewegen der zumindest zwei Werkzeugteile bis diese miteinander in Kontakt stehen und eine Kavität zum Befüllen mit einem thermoplastischen Material bilden, wobei die Kühlvorrichtung (30) innerhalb der Kavität angeordnet ist;
- Befüllen der Kavität mit einem thermoplastischen Material, sodass der gesamte Randbereich (60) der Kühlvorrichtung (30) von die äußere Wandung (20) des Batteriegehäuses (10) bildenden Material umschlossen wird;
- Öffnen des Formwerkzeugs und Entnehmen des fertigen Batteriegehäuses (10).

14. Verfahren zur Herstellung eines Batteriegehäuses (10) nach Anspruch 13, wobei das Verfahren vor dem Schließen des Formwerkzeugs die folgenden Verfahrensschritte aufweist:
- Befüllen des Fluidkanals (70) der Kühlvorrichtung (30) mit einem Fluid, vorzugsweise mit Wasser; und
- Schließen des Fluidkanals (70) derart, dass das Fluid nicht aus dem Fluidkanal austreten kann;
und wobei das Verfahren vor dem Öffnen des Formwerkzeugs den folgenden Verfahrensschritt aufweist:
- Entleeren des Fluidkanals (70) der Kühlvorrichtung (30).

15. Verfahren zur Herstellung eines Batteriegehäuses (10) nach einem der Ansprüche 13 oder 14, wobei das erste Werkzeugteil (120) einen Aufnahmebereich (121) zur Aufnahme der Kühlvorrichtung aufweist, wobei der Aufnahmebereich (121) zumindest abschnittsweise eine der Unterseite (41) der Basisplatte (40) der Kühlvorrichtung (30) korrespondierende Oberflächenkontur aufweist, und wobei das Verfahren den folgenden Verfahrensschritt aufweist:
- Einbringen der Kühlvorrichtung (30) in das erste Werkzeugteil (120) des Formwerkzeugs derart, dass die Unterseite (41) der Basisplatte (40) der Kühlvorrichtung (30) mit im Wesentlichen der gesamten Oberfläche der Unterseite (41) in flächigem Oberflächenkontakt mit der Oberflächenkontur des Aufnahmebereichs des ersten Werkzeugteils (120) steht.

## Claims

1. A battery housing (10) for accommodating at least one battery component, wherein the battery housing (10) has the following features:
- the battery housing (10) has an outer wall (20) at least partially enclosing a receiving volume (11);
- the battery housing (10) has a cooling device (30);
- the cooling device (30) has a base plate (40) having a first connecting surface (42) and a cover plate (50) having a second connecting surface (52);
- the connecting surfaces (42, 52) of the base plate (40) and of the covering plate (50) are integrally connected to one another at least in an edge region (60), which is formed circumferentially around the cooling device (30), in such a way that a fluid channel (70) for conducting a cooling fluid is formed between the base plate (40) and the covering plate (50);
- the cooling device (30) is connected to the battery housing (10) in such a way that the entire edge region (60) of the cooling device (30) is arranged within the outer wall (20) of the battery housing (10);
- the cooling device (30) forms at least a part of the housing base (12) of the battery housing (10);
- the battery housing (10) has at least one inner wall (80) connected to the outer wall (20);
- the inner wall (80) extends between two wall sections of the outer wall (20); and
- the inner wall (80) of the battery housing (10) is at least partially connected to a cooling surface (51) of the cooling device (30), the cooling surface facing the receiving volume (11).

2. The battery housing (10) according to claim 1, **characterized in that** the inner wall (80) extends between two opposing wall sections of the outer wall (20) in such a way that the receiving volume (11) is divided into two or more subvolumes (13).

3. The battery housing (10) according to any preceding claim, **characterized by** the following features:
- the battery housing (10) has a reinforcing structure (90) arranged on the cooling surface (51) of the cooling device (30);
- the reinforcing structure (90) has at least one first connecting section (91); and
- the reinforcing structure (90) is connected to the battery housing (10) in such a way that the first connecting section (91) is at least partially arranged inside the inner wall (80).

4. The battery housing (10) according to claim 3, **characterized in that** the reinforcement structure (90) has a second connecting section (92), wherein the second connecting section (92) is angled relative to the first connecting section (91), and wherein the reinforcement structure (90) is connected to the cooling surface (51) by means of the second connecting section (92).

5. The battery housing (10) according to any of claims 3 or 4, **characterized in that** the first connecting section (91) has through-openings (93) that are filled by the material forming the inner wall (80).

6. The battery housing (10) according to any preceding claim, **characterized in that** a support structure (100) is arranged within a free cross-section (73) of the fluid duct (70).

7. The battery housing (10) according to claim 6, **characterized in that** the support structure (100) has a wave shape or a rectangular shape in a cross-section.

8. The battery housing (10) according to any preceding claim, **characterized in that** a free cross-section of the fluid duct (70) has a width extension of less than or equal to 21 mm.

9. The battery housing (10) according to any preceding claim, **characterized in that** a duct dividing apparatus (110) is arranged in the fluid duct (70), which divides a free cross-section (73) of the fluid duct (70) at least partially into two separate free sub-cross-sections (74).

10. The battery housing (10) according to any of the preceding claims, **characterized in that** the edge region (60) surrounding the cooling device (30) has through-openings (61) which are filled by the material forming the outer wall (20).

11. The battery housing (10) according to any preceding claim, **characterized by** the following features:
- the cover plate (50) has a thickness extension of greater than or equal to 0.8 mm; and/or
- the base plate (40) has a thickness extension of greater than or equal to 0.6 mm.

12. A battery comprising at least one battery component, wherein the battery has the following features:
- the battery has a battery housing (10) according to any preceding claim; and
- the at least one battery component is arranged in the receiving volume (11) of the battery housing (10) and is in contact with the cooling surface (51) of the cooling device (30).

13. A method for producing a battery housing (10) according to any of claims 1 to 11, wherein the method has the following method steps:
- providing a molding tool, preferably an injection molding tool, wherein the mold has at least two mold parts;
- providing the cooling device (30), wherein the cooling device (30) has a fluid duct (70);
- inserting the cooling device (30) into a first mold part (120) of the molding tool;
- closing the molding tool by moving the at least two mold parts toward one another until they are in contact with one another and form a cavity for being filled with a thermoplastic material, wherein the cooling device (30) is arranged within the cavity;
- filling the cavity with a thermoplastic material so that the entire edge region (60) of the cooling device (30) is enclosed by the material forming the outer wall (20) of the battery housing (10);
- opening the molding tool and removing the finished battery housing (10).

14. The method for producing a battery housing (10) according to claim 13, wherein the method has the following method steps before the molding tool is closed:
- filling the fluid duct (70) of the cooling device (30) with a fluid, preferably with water; and
- closing the fluid duct (70) in such a way that the fluid cannot escape from the fluid duct;
and wherein the method has the following method step before opening the molding tool:
- draining the fluid duct (70) of the cooling device (30).

15. The method for producing a battery housing (10) according to any of claims 13 or 14, wherein the first mold part (120) has a receiving region (121) for receiving the cooling device, wherein the receiving region (121) has, at least partially, a surface contour corresponding to the underside (41) of the base plate (40) of the cooling device (30), and wherein the method has the following process step:
- inserting the cooling device (30) into the first mold part (120) of the mold tool in such a way that the underside (41) of the base plate (40) of the cooling device (30) is in flat surface contact with the surface contour of the receiving region of the first mold part (120) with substantially the entire surface of the underside (41).

## Revendications

1. Boîtier de batterie (10) destiné à loger au moins un composant de batterie, dans lequel le boîtier de batterie (10) présente les caractéristiques suivantes :
- le boîtier de batterie (10) présente une paroi extérieure (20) qui entoure au moins partiellement un volume de logement (11) ;
- le boîtier de batterie (10) présente un dispositif de refroidissement (30) ;
- le dispositif de refroidissement (30) présente une plaque de base (40) présentant une première surface de liaison (42) et une plaque de recouvrement (50) présentant une seconde surface de liaison (52) ;
- les surfaces de liaison (42, 52) de la plaque de base (40) et de la plaque de recouvrement (50) sont reliées entre elles par liaison de matière, au moins dans une zone périphérique (60) réalisée tout autour du dispositif de refroidissement (30), de telle sorte qu'un canal de fluide (70) destiné au passage d'un fluide de refroidissement est formé entre la plaque de base (40) et la plaque de recouvrement (50) ;
- le dispositif de refroidissement (30) est relié au boîtier de batterie (10) de telle sorte que l'ensemble de la zone périphérique (60) du dispositif de refroidissement (30) est situé à l'intérieur de la paroi extérieure (20) du boîtier de batterie (10) ;
- le dispositif de refroidissement (30) forme au moins une partie du fond de boîtier (12) du boîtier de batterie (10) ;
- le boîtier de batterie (10) présente au moins une paroi intérieure (80) reliée à la paroi extérieure (20) ;
- la paroi intérieure (80) s'étend entre deux sections de paroi de la paroi extérieure (20) ; et
- la paroi intérieure (80) du boîtier de batterie (10) est en contact, au moins dans certaines sections, avec une surface de refroidissement (51) du dispositif de refroidissement (30), laquelle surface de refroidissement est tournée vers le volume de logement (11).

2. Boîtier de batterie (10) selon la revendication 1, **caractérisé en ce que** la paroi intérieure (80) s'étend entre deux sections de paroi opposées de la paroi extérieure (20) de telle sorte que le volume de logement (11) est divisé en deux ou plusieurs sous-volumes (13).

3. Boîtier de batterie (10) selon l'une des revendications précédentes, **caractérisé par** les caractéristiques suivantes :
- le boîtier de batterie (10) présente une structure de renfort (90) disposée sur la surface de refroidissement (51) du dispositif de refroidissement (30) ;
- la structure de renfort (90) présente au moins une première section de liaison (91) ; et
- la structure de renfort (90) est reliée au boîtier de batterie (10) de telle sorte que la première section de liaison (91) est disposée au moins en partie à l'intérieur de la paroi intérieure (80).

4. Boîtier de batterie (10) selon la revendication 3, **caractérisé en ce que** la structure de renfort (90) présente une seconde section de liaison (92), dans lequel la seconde section de liaison (92) est coudée par rapport à la première section de liaison (91), et dans lequel la structure de renfort (90) est reliée à la surface de refroidissement (51) à l'aide de la seconde section de liaison (92).

5. Boîtier de batterie (10) selon l'une des revendications 3 ou 4,
**caractérisé en ce que** la première section de liaison (91) présente des ouvertures traversantes (93) qui sont remplies par le matériau formant la paroi intérieure (80).

6. Boîtier de batterie (10) selon l'une des revendications précédentes, **caractérisé en ce qu'**une structure de support (100) est disposée dans une section transversale (73) libre du canal de fluide (70).

7. Boîtier de batterie (10) selon la revendication 6, **caractérisé en ce que** la structure de support (100) présente une forme ondulée ou une forme rectangulaire dans une section transversale.

8. Boîtier de batterie (10) selon l'une des revendications précédentes, **caractérisé en ce qu'**une section transversale libre du canal de fluide (70) présente une largeur inférieure ou égale à 21 mm.

9. Boîtier de batterie (10) selon l'une des revendications précédentes, **caractérisé en ce que,** dans le canal de fluide (70), est disposé un moyen de division de canal (110) qui divise une section transversale (73) libre du canal de fluide (70), au moins dans certaines zones, en deux sous-sections (74) libres séparées l'une de l'autre.

10. Boîtier de batterie (10) selon l'une des revendications précédentes, **caractérisé en ce que** la zone périphérique (60) entourant le dispositif de refroidissement (30) présente des ouvertures traversantes (61) qui sont remplies par le matériau formant la paroi extérieure (20).

11. Boîtier de batterie (10) selon l'une des revendications précédentes, **caractérisé par** les caractéristiques suivantes :
- la plaque de recouvrement (50) présente une épaisseur supérieure ou égale à 0,8 mm ; et/ou
- la plaque de base (40) présente une épaisseur supérieure ou égale à 0,6 mm.

12. Batterie présentant au moins un composant de batterie, dans lequel la batterie présente les caractéristiques suivantes :
- la batterie présente un boîtier de batterie (10) selon l'une des revendications précédentes ; et
- l'au moins un composant de batterie est disposé dans le volume de logement (11) du boîtier de batterie (10) et est en contact avec la surface de refroidissement (51) du dispositif de refroidissement (30).

13. Procédé pour la fabrication d'un boîtier de batterie (10) selon l'une des revendications 1 à 11, dans lequel le procédé présente les étapes de procédé suivantes :
- fourniture d'un moule, de préférence d'un moule d'injection, dans lequel le moule présente au moins deux parties de moule ;
- fourniture du dispositif de refroidissement (30), dans lequel le dispositif de refroidissement (30) présente un canal de fluide (70) ;
- introduction du dispositif de refroidissement (30) dans une première partie de moule (120) du moule ;
- fermeture du moule par le rapprochement des au moins deux parties de moule jusqu'à ce qu'elles entrent en contact l'une avec l'autre et forment une cavité destinée à être remplie avec un matériau thermoplastique, dans lequel le dispositif de refroidissement (30) est disposé à l'intérieur de la cavité ;
- remplissage de la cavité avec un matériau thermoplastique, de manière à ce que l'ensemble de la zone périphérique (60) du dispositif de refroidissement (30) soit entouré par le matériau formant la paroi extérieure (20) du boîtier de batterie (10) ;
- ouverture du moule et retrait du boîtier de batterie (10) fini.

14. Procédé pour la fabrication d'un boîtier de batterie (10) selon la revendication 13, dans lequel le procédé présente, avant la fermeture du moule, les étapes de procédé suivantes :
- remplissage du canal de fluide (70) du dispositif de refroidissement (30) avec un fluide, de préférence de l'eau ; et
- fermeture du canal de fluide (70) de telle sorte que le fluide ne puisse pas s'échapper du canal de fluide ;
et dans lequel le procédé présente, avant l'ouverture du moule, l'étape de procédé suivante :
- vidange du canal de fluide (70) du dispositif de refroidissement (30).

15. Procédé pour la fabrication d'un boîtier de batterie (10) selon l'une des revendications 13 ou 14, dans lequel la première partie de moule (120) présente une zone de logement (121) destinée à loger le dispositif de refroidissement, dans lequel la zone de logement (121) présente, au moins dans certaines sections, un contour de surface correspondant à la face inférieure (41) de la plaque de base (40) du dispositif de refroidissement (30), et dans lequel le procédé présente l'étape de procédé suivante :
- introduction du dispositif de refroidissement (30) dans la première partie de moule (120) du moule de telle sorte que la face inférieure (41) de la plaque de base (40) du dispositif de refroidissement (30) soit en contact de surface avec le contour de surface de la zone de logement de la première partie de moule (120), et ce sur sensiblement toute la surface de la face inférieure (41).
